# EUROPEAN PATENT SPECIFICATION

(11) **EP 3 923 455 B1**
(45) Date of publication and mention of the grant of the patent: **26.02.2025**
(21) Application number: 19914669.7
(22) Date of filing: 05.02.2019
(51) Int. Cl.: H02K 9/06, H02K 5/20, H02K 11/33, H02K 3/50, H02K 11/05

(54) **DYNAMO-ELECTRIC MACHINE**
DYNAMO-ELEKTRISCHE MASCHINE
MACHINE DYNAMO-ÉLECTRIQUE

(43) Date of publication of application: 15.12.2021
(73) Proprietor: Mitsubishi Electric Corporation, Tokyo 100-8310 (JP)
(72) Inventor: HIGASHINO, Hiroyuki, Tokyo 100-8310 (JP); MIYAGI, Shungo, Tokyo 100-8310 (JP); MURAKAMI, Tadashi, Tokyo 100-8310 (JP); SASAKI, Daisuke, Tokyo 100-8310 (JP); TAHARA, Jun, Tokyo 100-8310 (JP)
(74) Representative: Hoffmann Eitle
(86) International application number: PCT/JP2019/003957
(87) International publication number: WO 2020/161784

(56) References cited:
- DE-A1- 102014 225 588
- FR-A1- 2 998 732
- JP-A- 2004 312 852
- JP-A- 2013 102 591
- JP-A- H0 746 795
- JP-B2- 3 561 927
- JP-B2- 5 270 718
- US-A1- 2007 035 270
- US-A1- 2010 289 351
- US-A1- 2014 203 675

## Description

### Technical Field

The present application relates to a rotating electric machine.

### Background Art

Owing to space saving properties and ease of mounting, or to a reduction in size of a wiring harness that connects a motor and an inverter, an electromechanical rotating electric machine wherein a motor and an inverter are integrated has been developed in recent years as a vehicle-use rotating electric machine mounted particularly in an automobile.

This kind of rotating electric machine including an inverter and a rectifying circuit power conversion unit needs a cooling structure that cools the rotating electric machine, and the kinds of cooling structure shown in JP 6 372650 B and JP 5 661167 B are known. This power supply unit or circuit substrate is attached to an end of a rotating electric machine, and furthermore, a heatsink is attached to the power supply unit or the circuit substrate, and the power supply unit or the circuit substrate is cooled by a refrigerant flow generated by a cooling fan mounted in the rotating electric machine.

FR 2998732 A1 is related to a rotating electrical machine comprising a rotating machine main body and a power conversion unit provided at one axial side of the rotating machine main body and electrically connected to the rotating machine main body. Further, an external device connection portion is provided at the other axial side of the rotating machine main body and attached to an end portion of the electric machine rotary shaft for transmitting motion between said machine shaft and an external device. The rotating machine main body comprises an external device connection portion side first bracket and a non-external device connection portion side second bracket, which configure a housing, a rotor supported by said first and second bracket so as to be rotatable, a stator comprising a stator core and a stator winding fixed by said first and second bracket and disposed, coaxially so as to enclose the rotor and blades attached to a non-external device connection portion side of the rotor. Moreover, a flow path, along which a refrigerant is caused to flow by a rotation of the fan blades, cooling the power conversion unit and the stator is formed and has a flow path inflow portion in an outer peripheral face of the power conversion unit and a flow path outflow portion in an outer peripheral face of the second bracket, wherein the flow path inflow portion and the flow path outflow portion are disposed separated in the axial direction. Similar machines are derivable from US 2014/203675 A1, DE 10 2014 225588 A1, US 2007/035270 A1, JP 2013 102591 A and JP 2004 312852 A.

### Summary of Invention

### Technical Problem

However, a rotating electric machine disclosed in JP 6 372650 B is self-cooled by an airflow being generated in a circuit substrate portion and a rotating electric machine interior by an impeller that rotates together with a rotary shaft, but the airflow flows through one of an intake port, a main exhaust port, and an intake/exhaust port provided in a housing, and a flange portion extending outward in a radial direction is formed in an exhaust edge portion of the main exhaust port, because of which this kind of structure is such that air that has cooled the rotating electric machine portion and increased in temperature is taken in again through the intake/exhaust port, and a cooling performance decreases. Also, due to the flange portion extending outward in the radial direction of the exhaust edge portion being provided, the rotating electric machine increases in size in the radial direction.

Furthermore, an electromechanical rotating electric machine disclosed in JP 5 661167 B is such that a cooling fan is attached to a rotating electric machine portion, in addition to which a power conversion unit is attached to an outer end face side of a non-load side bracket of the rotating electric machine portion, and furthermore, a heat dissipating fin is attached to a side of the power conversion unit opposite to that of a power semiconductor part, because of which the power semiconductor part is cooled by an airflow generated by a rotation of the cooling fan being caused to flow to the heat dissipating fin. Also, the electromechanical rotating electric machine includes an intake port in the outer end face of the non-load side bracket, that is, the face on which the power conversion unit is mounted, and includes an exhaust port in an outer peripheral face of the non-load side bracket, and furthermore, a backflow preventing protruding portion is included extended in a circumferential direction on an outward end face of the non-load side bracket. With this kind of configuration, a positional relationship between the backflow preventing protruding portion included outside the non-load side bracket and the intake port provided in the end face of the non-load side bracket is such that the power conversion unit cannot be installed in at least a region as far as an axial direction length of the backflow preventing protruding portion in an axial direction non-load side region of the intake port, and relatively speaking, the power conversion unit has to be smaller than an outer diameter of the rotating electric machine portion, and freedom of design is limited, or the rotating electric machine portion has to be larger in a radial direction than the power conversion unit, and therefore the radial direction of the overall electromechanical rotating electric machine increases in size.

The present application, having been contrived in order to resolve the heretofore described kinds of problem, provides a cooling structure of a rotating electrical machine that is small in a radial direction, wherein a heat generating part of a power supply unit or a circuit substrate can be efficiently cooled.

### Solution to Problem

The problem is solved by a rotating electric machine according to claim 1.

The rotating electric machine disclosed in the present application is a rotating electric machine including a rotating machine main body, a power conversion unit provided on one side on an axis of rotation of the rotating machine main body and electrically connected to the rotating machine main body, and an external device connection portion provided on the other side on the axis of rotation of the rotating machine main body, wherein the rotating machine main body has an external device connection portion side bracket and a non-pulley means side bracket, in the following also called non-external device connection portion side bracket, that configure a housing, a rotor supported in such a way as to be able to rotate by the external device connection portion side bracket and the non-external device connection portion side bracket, a stator fixed by the external device connection portion side bracket and the non-external device connection portion side bracket and disposed coaxially in such a way as to enclose the rotor, and blades attached to a non-external device connection portion side of the rotor, the stator has a stator core and a stator winding, a flow path along which a refrigerant is caused to flow by a rotation of the non-external device connection portion side blades, cooling the power conversion unit and the stator, is formed, the flow path has a flow path inflow portion in an outer peripheral face of the power conversion unit and a flow path outflow portion in an outer peripheral face of the non-external device connection portion side bracket, and the flow path inflow portion and the flow path outflow portion are disposed separated in a rotation axis direction, wherein the flow path outflow portion is configurated as claimed in claim 1.

### Advantageous Effects of Invention

According to the rotating electric machine disclosed in the present application, a flow path inflow portion is provided in an outer peripheral face of a power conversion unit, a flow path outflow portion is provided in an outer peripheral face of a non-external device connection portion side bracket, and the flow path inflow portion and the flow path outflow portion are disposed separated in a rotation axis direction, whereby a high temperature refrigerant that has cooled the power conversion unit and been discharged from the flow path outflow portion is restricted from being suctioned in from the flow path inflow portion again, and a cooling performance of the rotating electric machine can be caused to improve, while restricting an increase in size of the rotating electric machine in a radial direction.

### Brief Description of Drawings

[Fig. 1] Fig. 1 is a perspective view showing an external outline of a rotating electric machine according to a first embodiment according to the invention.
[Fig. 2] Fig. 2 is a drawing showing a cross-section along an axis of rotation of the rotating electric machine according to the first embodiment of the invention
[Fig. 3] Fig. 3 is a sectional view showing a comparative example of a rotating electric machine not according to the invention.
[Fig. 4] Fig. 4 is a sectional view showing a first modification of the rotating electric machine according to the first embodiment of the invention.
[Fig. 5] Fig. 5 is a sectional view showing a second modification of the rotating electric machine according to the first embodiment of the invention.
[Fig. 6] Fig. 6 is a sectional view showing a third modification of the rotating electric machine according to the first embodiment of the invention.
[Fig. 7] Fig. 7 is a sectional view showing a rotating electric machine according to a second embodiment not according to the invention.
[Fig. 8] Fig. 8 is a sectional view showing a rotating electric machine according to a third embodiment not according to the invention.
[Fig. 9] Fig. 9 is a sectional view showing a rotating electric machine according to a fourth embodiment according to the invention.
[Fig. 10] Fig. 10 is a sectional view showing a rotating electric machine according to a fifth embodiment according to the invention.
[Fig. 11] Fig. 11 is a sectional view showing a rotating electric machine according to a sixth embodiment according to the invention.
[Fig. 12] Fig. 12 is a sectional view showing a main portion of Fig. 11 enlarged.
[Fig. 13] Fig. 13 is a drawing showing a cross-section along a D-D line of Fig. 12.
[Fig. 14] Fig. 14 is a sectional view showing a rotating electric machine according to a modification of the sixth embodiment.

### Description of Embodiments

Hereafter, embodiments will be described based on the drawings. Embodiments of the present application are not limited by the following description. Also, forms of constituent components described in the specification are nothing more than examples, and the embodiments are not limited by these descriptions. Alterations and/or modifications of the described embodiments are contemplated as being alternative forms of the invention as far as they do not depart from the scope of the invention, which is defined by the appended claims.

### First Embodiment according to the invention

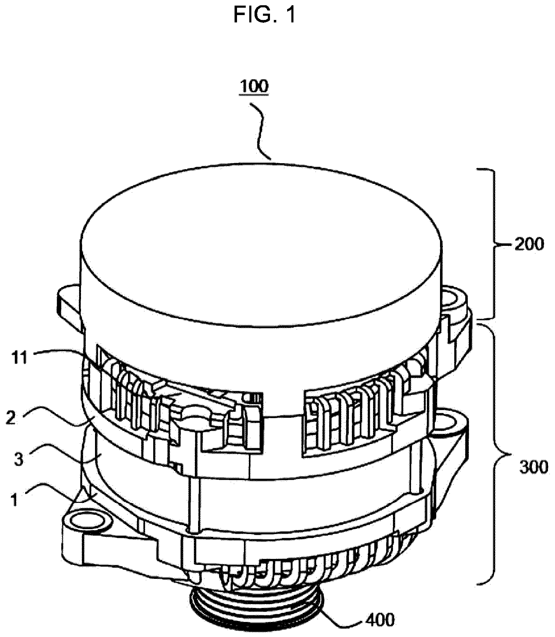

Fig. 1 is a perspective view showing an external appearance of a rotating electric machine according to a first embodiment according to the invention of the present application.

In the drawing, a rotating electric machine 100 is configured of a power conversion unit 200, a rotating machine main body 300, and an external device connection portion 400, includes the power conversion unit 200 on one side on an axis of rotation of the rotating machine main body 300, and includes the external device connection portion 400 on the other side on the axis of rotation. The external device connection portion 400 is of a pulley form in the drawing, but in other embodiments not according to the invention it may be of any form provided that the external device connection portion 400 can be connected to an external device, and various structures can be employed.

Herein, the power conversion unit 200 operates as an inverter circuit for controlling the rotating machine main body 300 or as a converter circuit that converts power generated by the rotating machine main body 300.

Also, an external form of the rotating machine main body 300 is formed of an external device connection portion side bracket 1 and a non-external device connection portion side bracket 2, which configure a housing, and a stator 3 fixed and supported by the external device connection portion side bracket 1 and the non-external device connection portion side bracket 2, and the rotating machine main body 300 operates as a motor that drives or assists an unshown gear device or an internal combustion engine connected to the external device connection portion 400, or as a generator driven by the gear device or the internal combustion engine.

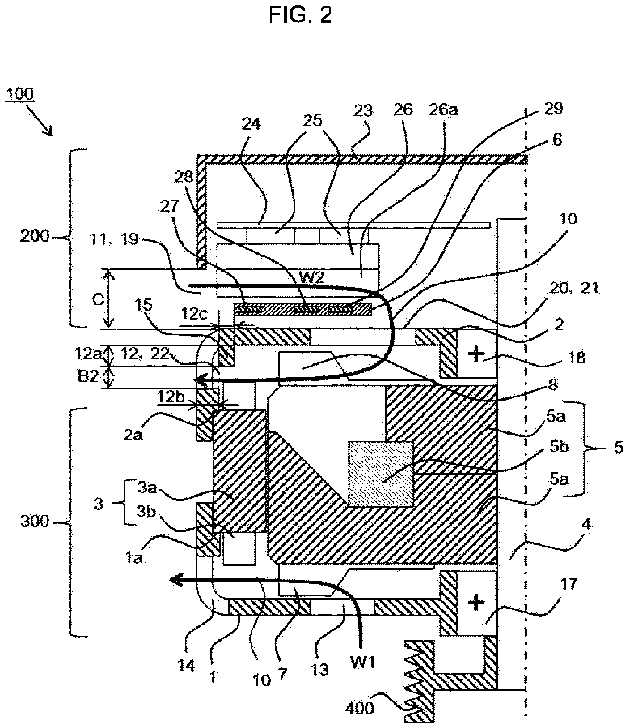

Fig. 2 is a drawing showing a cross-section along an axis of rotation of the rotating electric machine 100 in Fig. 1.

In the drawing, the rotating machine main body 300 includes the stator 3, which is supported by being fitted into a fitting portion 1a of the external device connection portion side bracket 1 and a fitting portion 2a of the non-external device connection portion side bracket 2, a rotary shaft 4, which is supported in such a way as to be able to rotate by the external device connection portion side bracket 1 and the non-external device connection portion side bracket 2 across bearings 17 and 18, and a rotor 5, which is attached to the rotary shaft 4 and disposed opposing the stator 3 in such a way as to enclose the stator 3. An external form of the stator 3 is circular, and the stator 3 includes a stator core 3a, and a stator winding 3b, which protrudes from both end portions of the stator core 3a and is mounted on the stator core 3a.

Meanwhile, the rotor 5 has a rotor core 5a, which is supported by the rotary shaft 4, and a field winding 5b, which is wound around the rotor core 5a, and the external device connection portion 400 is attached to an external device connection portion side end portion of the rotary shaft 4. Also, an external device connection portion side blade 7, which is driven by the rotary shaft 4 and causes a refrigerant flow to be generated, is attached to a rotation axis direction external device connection portion side end portion of the rotor core 5a, and a non-external device connection portion side blade 8, which is driven by the rotary shaft 4 and causes a refrigerant flow to be generated, is attached to a rotation axis direction non-external device connection portion side end portion of the rotor core 5a.

Furthermore, a configuration is such that an external device connection portion side flow path inflow portion 13 is formed in a rotation axis direction external device connection portion side end face of the external device connection portion side bracket 1 and an external device connection portion side flow path outflow portion 14 is formed in a radial direction end face of the external device connection portion side bracket 1, and a refrigerant is caused to flow into an interior of the external device connection portion side bracket 1, and the refrigerant is caused to flow out from the interior of the external device connection portion side bracket 1, with a rotation of the external device connection portion side blade 7 as a dynamic.

Also, a configuration is such that a non-external device connection portion side bracket refrigerant inflow portion 21 is formed in a rotation axis direction external device connection portion side end face of the non-external device connection portion side bracket 2 and a non-external device connection portion side bracket refrigerant outflow portion 22 is formed in a radial direction end face of the non-external device connection portion side bracket 2, and a refrigerant is caused to flow into an interior of the non-external device connection portion side bracket 2, and the refrigerant is caused to flow out from the interior of the non-external device connection portion side bracket 2, with a rotation of the non-external device connection portion side blade 8 as a dynamic.

Next, a configuration of the power conversion unit 200 will be described.

The power conversion unit 200 includes a case 23 that is fixed to a rotation axis direction non-external device connection portion side of the non-external device connection portion side bracket 2 and encloses the whole of the unit, a substrate 24 that forms an electrical circuit, an electronic part 25 that is electrically connected to, and fixed to, the substrate 24, and a heatsink 26 that is thermally coupled in order to cool the electronic part 25. A fin 26a is formed on the heatsink 26.

Also, a configuration is such that a power conversion unit refrigerant inflow portion 19 is formed in a radial direction outer face of the power conversion unit 200 and a power conversion unit refrigerant outflow portion 20 is formed in a rotation axis direction external device connection portion side end face of the power conversion unit 200, and a refrigerant is caused to flow into the power conversion unit 200, and the refrigerant is caused to flow out from the power conversion unit 200, with a rotation of the non-external device connection portion side blade 8 as a dynamic.

As the power conversion unit 200 is provided on a rotation axis direction non-external device connection portion side of the rotating machine main body 300, a refrigerant that flows out from the power conversion unit refrigerant outflow portion 20 flows into the rotating machine main body 300 via the non-external device connection portion side bracket refrigerant inflow portion 21, which is also the power conversion unit refrigerant outflow portion 20.

Furthermore, a plate 6 is disposed between the power conversion unit 200 and the rotating machine main body 300, and wiring members 27, 28, and 29 for electrically connecting components, and electrically connecting the power conversion unit 200 and the rotating machine main body 300, are provided in the plate 6.

This configuration is such that a flow path 10, wherein a refrigerant flows in from the external device connection portion side flow path inflow portion 13 and the refrigerant flows out from the external device connection portion side flow path outflow portion 14, is formed on the external device connection portion side. That is, a refrigerant that flows in from the external device connection portion side flow path inflow portion 13 cools the stator 3 by flowing in contact with the external device connection portion side of the stator core 3a and the stator winding 3b, and the refrigerant, which has received heat from the stator 3, flows out from the external device connection portion side flow path outflow portion 14.

Meanwhile, the flow path 10, wherein a refrigerant flows in from the power conversion unit refrigerant inflow portion 19 and the refrigerant flows out from the non-external device connection portion side bracket refrigerant outflow portion 22, is formed on the non-external device connection portion side. That is, a refrigerant that flows in from the power conversion unit refrigerant inflow portion 19 cools the electronic part 25 by flowing to the heatsink 26, and the refrigerant, which has received heat from the heatsink 26, flows out from the power conversion unit refrigerant outflow portion 20. Subsequently, the refrigerant flows to the rotating machine main body 300 side from the non-external device connection portion side bracket refrigerant inflow portion 21, which is also the power conversion unit refrigerant outflow portion 20, and cools the stator 3 by flowing in contact with the non-external device connection portion side of the stator core 3a and the stator winding 3b. Finally, the refrigerant, which has received heat from the stator 3, is increased in temperature further than when flowing into the non-external device connection portion side bracket refrigerant inflow portion 21 and flows out from the non-external device connection portion side bracket refrigerant outflow portion 22.

Next a main configuration and an operation of the rotating electric machine 100 that regulate a refrigerant flow will be described.

As shown in Fig. 2, the rotating electric machine 100 is such that in a flow path outflow portion 12 of the non-external device connection portion side bracket 2, a first flow path outflow portion thickness 12a configuring a rotation axis direction thickness is formed by being provided protruding from a non-external device connection portion side end face side of the non-external device connection portion side bracket 2 toward the external device connection portion side, inward in the radial direction from the flow path outflow portion 12, and the first flow path outflow portion thickness 12a and a second flow path outflow portion thickness 12b configuring a radial direction thickness of the flow path outflow portion 12 in an outer peripheral face of the non-external device connection portion side bracket 2 are configured in such a way as to overlap at an outer peripheral side end edge of a third flow path outflow portion thickness 12c, which is a radial direction thickness of the first flow path outflow portion thickness 12a, and an inner peripheral side end edge of the second flow path outflow portion thickness 12b. By the first flow path outflow portion thickness 12a and the second flow path outflow portion thickness 12b overlapping and reducing an axial direction length of the flow path outflow portion 12 in this way, a first separating portion 15 is formed.

Consequently, a heated refrigerant that flows out from the flow path outflow portion 12 can be restricted from flowing in again from a flow path inflow portion 11 by the flow path inflow portion 11 and the flow path outflow portion 12 being caused to separate in the rotation axis direction.

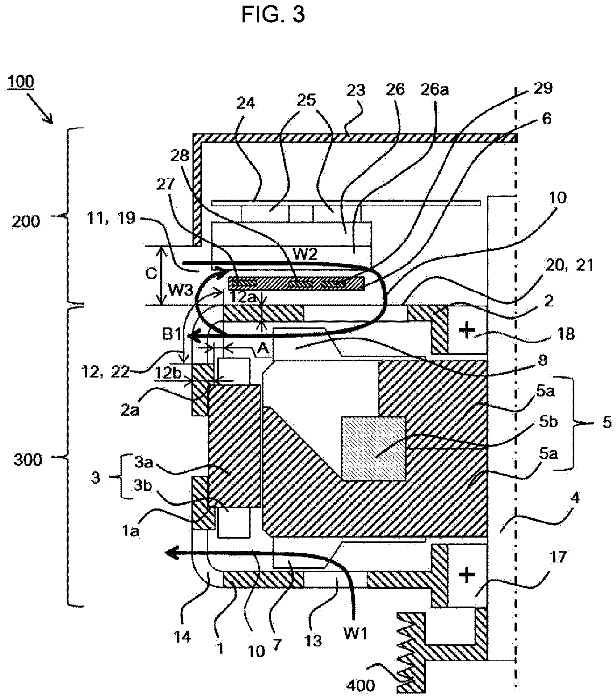

With regard to this point, a structure of the kind of rotating electric machine 100 shown in Fig. 3, which is a comparative example not according to the invention, is such that a refrigerant on the non-external device connection portion side flows in the way of a flow W2, and one portion of a refrigerant that flows out from the refrigerant outflow portion 22 flows into the power conversion unit refrigerant inflow portion 19 again in the way of a flow W3. That is, a refrigerant that has cooled the electronic part 25 and the stator 3 and whose temperature has increased flows in again, because of which a cooling efficiency with respect to the electronic part 25 and the stator 3 worsens. This is a problem that occurs because a flow path outflow portion region B1 and a flow path inflow portion region C are neighboring, and furthermore, is a problem that occurs more easily because there is a radial direction opening A in a flow path outflow portion axial direction face.

In response to this kind of problem, the flow path inflow portion 11 and the flow path outflow portion 12 can be caused to separate in the rotation axis direction by the first flow path outflow portion thickness 12a provided protruding toward the external device connection portion side in the first embodiment being formed, as a result of which causing a refrigerant that flows out from the flow path outflow portion 12 to flow in again from the flow path inflow portion 11 is restricted, and a temperature of a refrigerant inflow from the flow path inflow portion 11 can be lowered.

Also, one portion of the third flow path outflow portion thickness 12c, which is the radial direction thickness of the first flow path outflow portion thickness 12a, and one portion of the second flow path outflow portion thickness 12b overlap, reducing the axial direction length of the flow path outflow portion 12, whereby a flow speed of a refrigerant that flows out from the flow path outflow portion 12 increases, and a total pressure, including a dynamic pressure, becomes greater than a suction pressure (a static pressure) in the flow path inflow portion 11, because of which a repeated inflow can be further restricted, and cooling of the rotating electric machine 100 can be caused to be carried out efficiently.

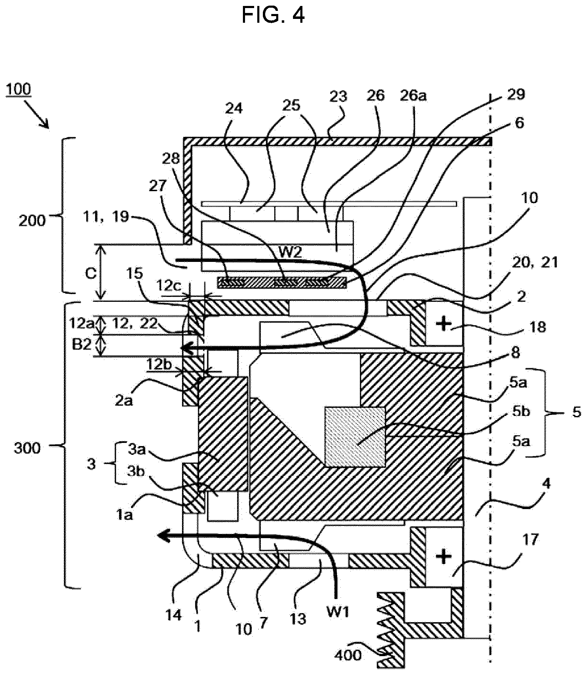

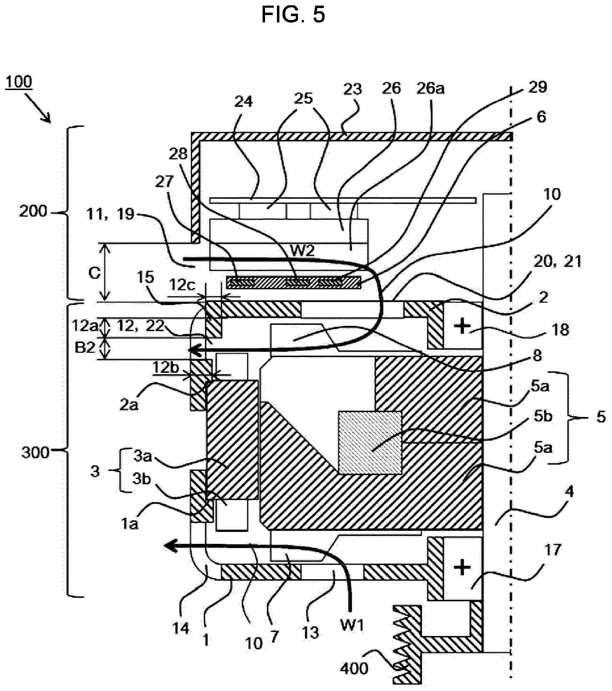

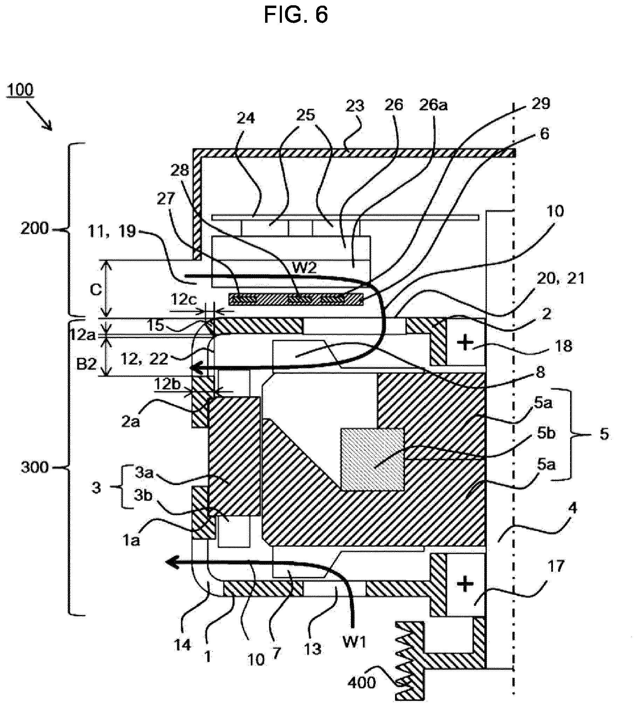

Although the rotating electric machine in Fig. 2 is such that the inner peripheral face of the second flow path outflow portion thickness 12b and the outer peripheral face of the third flow path outflow portion thickness 12c are formed in such a way as to coincide, a configuration wherein the second flow path outflow portion thickness 12b and the third flow path outflow portion thickness 12c overlap completely, as shown in Fig. 4, may be adopted, and a configuration wherein the second flow path outflow portion thickness 12b and the third flow path outflow portion thickness 12c overlap in one portion, as shown in Fig. 5, may be adopted. Furthermore, the first separating portion 15 may be configured in such a way as to curve in the axial direction along an outline of the non-external device connection portion side bracket 2, as shown in Fig. 6.

### Second Embodiment not according to the invention

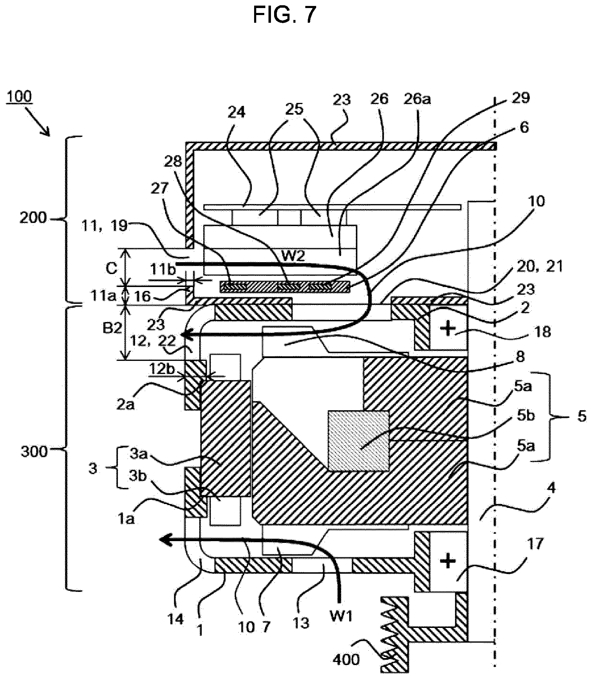

Fig. 7 is a sectional view showing the rotating electric machine 100 according to a second embodiment not according to the invention of the present application.

In the drawing, the same reference signs are allotted to portions the same as in the first embodiment, and a description thereof will be omitted.

In Fig. 7, in the second embodiment, a form housing the substrate 24 and the electronic part 25 is adopted for the case 23, and the flow path inflow portion 11 is provided in a non-external device connection portion side face of the case 23, which is an inner side of a face opposing the non-external device connection portion side bracket 2. That is, a first flow path inflow portion thickness 11a configuring a rotation axis direction thickness is configured facing the rotation axis direction non-external device connection portion side, and furthermore, a second flow path inflow portion thickness 11b, which is a radial direction thickness of the first flow path inflow portion thickness 11a, and the second flow path outflow portion thickness 12b that configures the radial direction thickness of the flow path outflow portion 12 in the outer peripheral face of the non-external device connection portion side bracket 2 are disposed in such a way that at least one portion overlaps in the radial direction, whereby a second separating portion 16 that separates the flow path inflow portion 11 and the flow path outflow portion 12 is formed.

The rotating electric machine 100 configured in this way is such that the non-external device connection portion side refrigerant flow W2 is restricted from being caused to flow in from the flow path inflow portion 11 again after flowing out from the flow path outflow portion 12 by the second separating portion 16 being provided, and a temperature of a refrigerant inflow from the flow path inflow portion 11 is not caused to rise, as a result of which cooling of the rotating electric machine 100 can be caused to be carried out efficiently.

### Third Embodiment not according to the invention

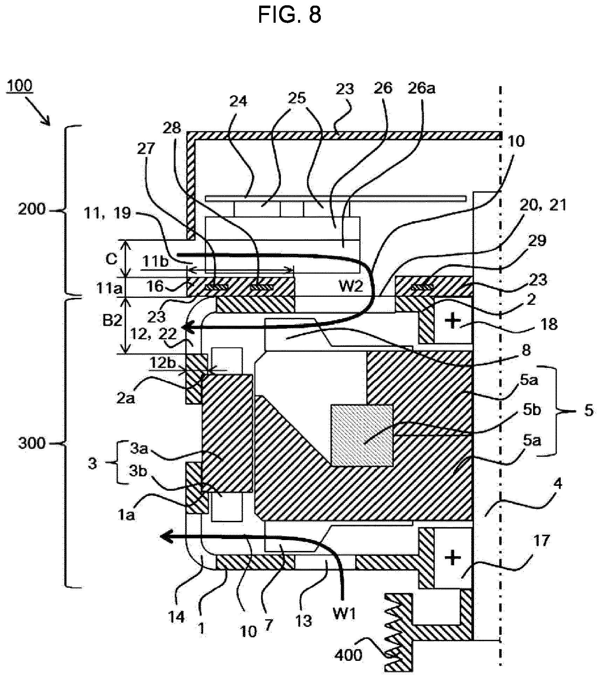

Fig. 8 is a sectional view of a rotating electric machine according to a third embodiment not according to the invention of the present application. The third embodiment is such that only a configuration of a separating portion differs from that of the first embodiment and the second embodiment, because of which only the differing portion will be described, and a description of other portions will be omitted.

The plate 6, in which the wiring members 27, 28, and 29 for electrically connecting the power conversion unit 200 and the rotating machine main body 300 are provided, is provided in the first embodiment and the second embodiment, but in the third embodiment, a face on the external device connection portion side of the case 23 is thickened, and the wiring members 27, 28, and 29 are provided in the plane of the case 23.

By the wiring members 27, 28, and 29 being provided in this way, the face on the external device connection portion side of the case 23 becomes thicker, and this is configured as the first flow path inflow portion thickness 11a. As a result of this, the second flow path inflow portion thickness 11b, which is the radial direction thickness of the first flow path inflow portion thickness 11a, and the second flow path outflow portion thickness 12b that configures the radial direction thickness of the flow path outflow portion 12 in the outer peripheral face of the non-external device connection portion side bracket 2 are disposed in such a way that at least one portion overlaps in the radial direction, whereby the second separating portion 16 that separates the flow path inflow portion 11 and the flow path outflow portion 12 can be configured.

That is, the non-external device connection portion side refrigerant flow W2 can be restricted from being caused to flow in from the flow path inflow portion 11 again after flowing out from the flow path outflow portion 12 by the second separating portion 16 being provided. As a result of this, cooling of the rotating electric machine 100 can be caused to be carried out efficiently. Wiring members included in the plane of the case 23 may be any one or more of the wiring members 27, 28, and 29.

### Fourth Embodiment according to the invention

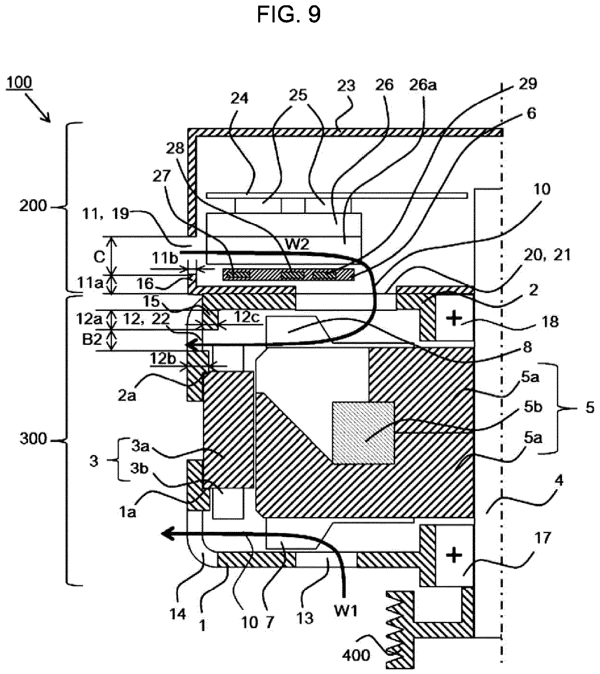

Fig. 9 is a rotation axis direction sectional view from Fig. 1 of a rotating electric machine according to a fourth embodiment according to the invention of the present application. The fourth embodiment is such that only a configuration of a separating portion differs from that of the first embodiment, the second embodiment, and the third embodiment, because of which only the differing portion will be described, and a description of other portions will be omitted.

The fourth embodiment is a combination of characteristic portions of the first embodiment and the second embodiment. That is, in the flow path outflow portion 12 of the non-external device connection portion side bracket 2, the first flow path outflow portion thickness 12a configuring the rotation axis direction thickness from the non-external device connection portion side end face side of the non-external device connection portion side bracket 2 toward the external device connection portion side, inward in the radial direction from the flow path outflow portion 12, and the second flow path outflow portion thickness 12b configuring the radial direction thickness of the flow path outflow portion 12 in the outer peripheral face of the non-external device connection portion side bracket 2 are disposed in such a way that the outer peripheral side end edge of the third flow path outflow portion thickness 12c, which is the radial direction thickness of the first flow path outflow portion thickness 12a, and the inner peripheral side end edge of the second flow path outflow portion thickness 12b overlap in such a way that there is no opening between the first flow path outflow portion thickness 12a and the second flow path outflow portion thickness 12b when seen in the rotation axis direction, thereby reducing the axial direction length of the flow path outflow portion 12. Because of this, the first flow path outflow portion thickness 12a configures the first separating portion 15.

Furthermore, the first flow path inflow portion thickness 11a forming the rotation axis direction thickness is configured facing the rotation axis direction non-external device connection portion side on the inner side of the face opposing the non-external device connection portion side bracket 2, that is, the non-external device connection portion side face, of the case 23 that encloses the substrate 24 and the electronic part 25 included in the power conversion unit 200, and the second flow path inflow portion thickness 11b, which is the radial direction thickness of the first flow path inflow portion thickness 11a, and the second flow path outflow portion thickness 12b that configures the radial direction thickness of the flow path outflow portion 12 in the outer peripheral face of the non-external device connection portion side bracket 2 are disposed in such a way that at least one portion overlaps in the radial direction. By so doing, the second separating portion 16 that separates the flow path inflow portion 11 and the flow path outflow portion 12 is configured.

The rotating electric machine 100 configured in this way is such that a non-external device connection portion side refrigerant flow can be restricted from being caused to flow in from the flow path inflow portion 11 again after flowing out from the flow path outflow portion 12 by the first separating portion 15 being provided, and the temperature of a refrigerant inflow from the flow path inflow portion 11 is not caused to rise. As a result of this, cooling of the rotating electric machine 100 can be caused to be carried out efficiently. In the same way, a non-external device connection portion side refrigerant being caused to flow in from the flow path inflow portion 11 again after flowing out from the flow path outflow portion 12 can be further restricted by the second separating portion 16 being provided, as a result of which cooling of the rotating electric machine 100 can be caused to be carried out more efficiently.

### Fifth Embodiment according to the invention

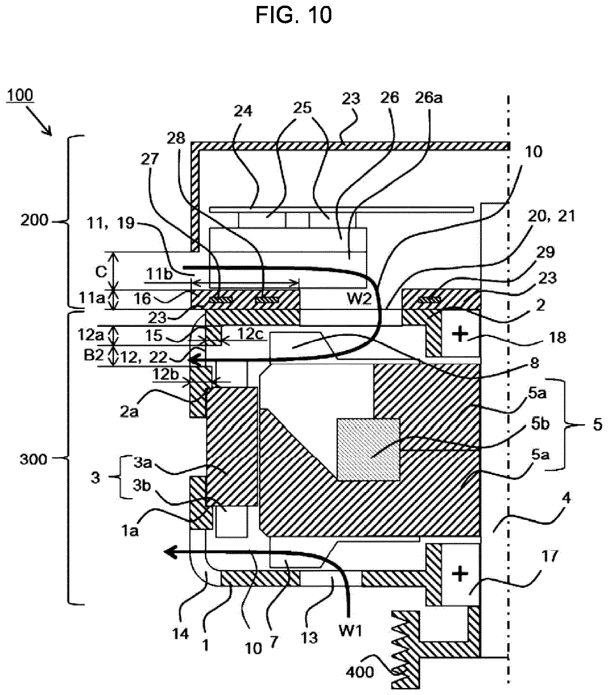

Fig. 10 is a sectional view showing a rotating electric machine according to a fifth embodiment according to the invention of the present application. The fifth embodiment is such that only a configuration of a separating portion differs from that of the first embodiment, the second embodiment, the third embodiment, and the fourth embodiment, because of which only the differing portion will be described, and a description of other portions will be omitted.

The fifth embodiment is a combination of characteristic portions of the first embodiment and the third embodiment. That is, in the flow path outflow portion 12 of the non-external device connection portion side bracket 2, the first flow path outflow portion thickness 12a configuring the rotation axis direction thickness from the non-external device connection portion side end face side of the non-external device connection portion side bracket 2 toward the external device connection portion side, inward in the radial direction from the flow path outflow portion 12, and the second flow path outflow portion thickness 12b configuring the radial direction thickness of the flow path outflow portion 12 in the outer peripheral face of the non-external device connection portion side bracket 2 are disposed in such a way that the outer peripheral side end edge of the third flow path outflow portion thickness 12c, which is the radial direction thickness of the first flow path outflow portion thickness 12a, and the inner peripheral side end edge of the second flow path outflow portion thickness 12b overlap in such a way that there is no opening between the first flow path outflow portion thickness 12a and the second flow path outflow portion thickness 12b when seen in the rotation axis direction, thereby reducing the axial direction length of the flow path outflow portion 12, whereby the first flow path outflow portion thickness 12a configures the first separating portion 15.

Furthermore, the wiring members 27, 28, and 29 are included in the case 23 instead of the plate 6. By the wiring members 27, 28, and 29 being included, the thickness of a relevant region of the case 23 increases, but this is configured as the first flow path inflow portion thickness 11a, and the radial direction thickness of a region including any one or more of the wiring members 27, 28, and 29, that is, a region including the wiring members 27, 28, and 29 in Fig. 10, is configured as the second flow path inflow portion thickness 11b. According to this kind of form, the second flow path inflow portion thickness 11b, which is the radial direction thickness of the first flow path inflow portion thickness 11a, and the second flow path outflow portion thickness 12b that configures the radial direction thickness of the flow path outflow portion 12 in the outer peripheral face of the non-external device connection portion side bracket 2 are disposed in such a way that at least one portion overlaps in the radial direction, whereby the second separating portion 16 that separates the flow path inflow portion 11 and the flow path outflow portion 12 is configured.

The rotating electric machine 100 configured in this way is such that the non-external device connection portion side refrigerant flow W2 is restricted from being caused to flow in from the flow path inflow portion 11 again after flowing out from the flow path outflow portion 12 by the first separating portion 15 being provided, and the temperature of a refrigerant inflow from the flow path inflow portion 11 can be lowered. As a result of this, cooling of the rotating electric machine 100 can be caused to be carried out efficiently. In the same way, the non-external device connection portion side refrigerant flow W2 can be further restricted from being caused to flow in from the flow path inflow portion 11 again after flowing out from the flow path outflow portion 12 by the second separating portion 16 being provided, and the temperature of a refrigerant inflow from the flow path inflow portion 11 can be further lowered. As a result of this, cooling of the rotating electric machine 100 can be caused to be carried out more efficiently.

### Sixth Embodiment according to the invention

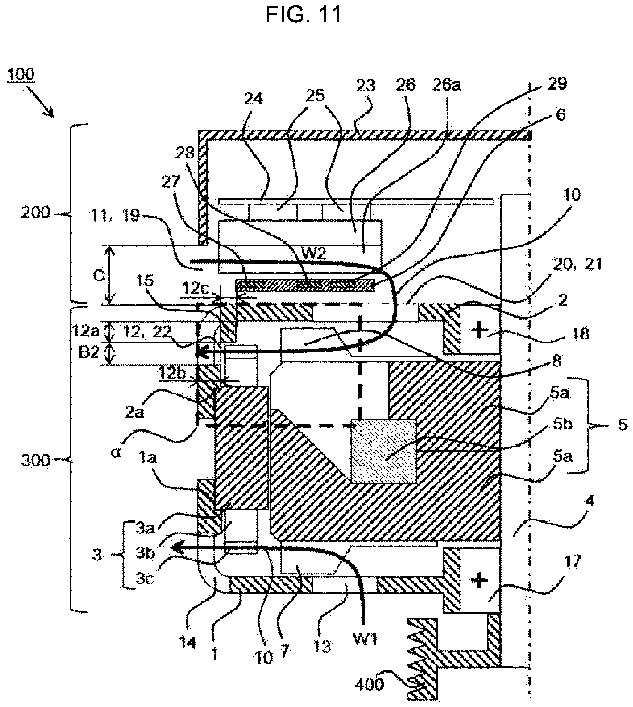

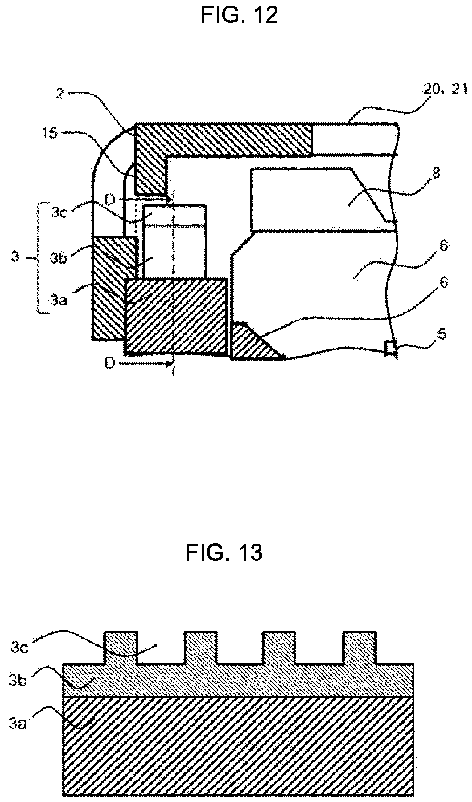

Fig. 11 is a sectional view showing a rotating electric machine according to a sixth embodiment according to the invention of the present application, Fig. 12 is a sectional view showing a main portion of Fig. 11 enlarged, and Fig. 13 is a drawing showing a cross-section along a D-D line of Fig. 12.

The sixth embodiment is such that only a configuration of a separating portion differs from that of the first embodiment, the second embodiment, the third embodiment, the fourth embodiment, and the fifth embodiment, because of which only the differing portion will be described, and a description of other portions will be omitted.

In the sixth embodiment, the stator winding 3b is exposed from end faces on the external device connection portion side and the non-external device connection portion side of the stator core 3a, and is disposed in such a way that at least one portion protrudes into the flow path 10, and one portion overlaps the flow path outflow portion 12 in the rotation axis direction. Furthermore, an end portion of the stator winding 3b exposed from the end faces on the external device connection portion side and the non-external device connection portion side of the stator core 3a includes a rotation axis direction recessed portion 3c in one or more places in the circumferential direction, as shown in Fig. 13.

The rotating electric machine 100 configured in this way is such that by a refrigerant flowing in contact with the stator winding 3b protruding into a flow path, the stator winding 3b can be more efficiently cooled. Furthermore, a surface area increases owing to the recessed portion 3c being provided in the stator winding 3b, because of which the stator winding 3b can be more efficiently cooled.

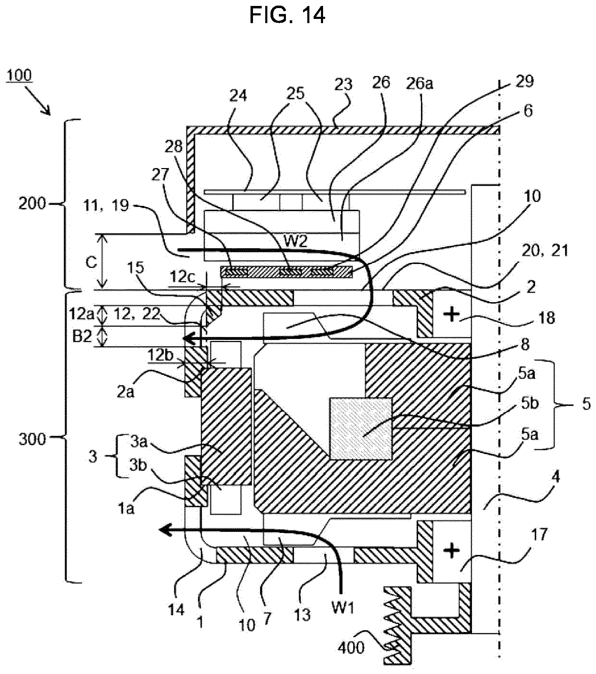

The flow path outflow portion 12 may be of a form wherein the first separating portion 15 inclines more to the external device connection portion 400 side the farther the first separating portion 15 progresses to the outer side in the radial direction, as shown in Fig. 14.

Heretofore, embodiments of the present application have been described, but the embodiments show examples, and the present application is such that a rotating electric machine may be configured by characteristic configurations of the embodiments being combined as appropriate, and various forms can be adopted, as will be described hereafter.

That is, numbers of the substrate 24, the electronic part 25, the heatsink 26, and the wiring members 27 to 29 in the drawings are not limited to the numbers shown, and various forms for further exhibiting an advantage as a separating portion can be adopted as the form of the flow path outflow portion 12. Furthermore, various forms can be adopted as forms of the external device connection portion side flow path outflow portion 14 of the external device connection portion side bracket 1 and the non-external device connection portion side bracket refrigerant outflow portion 22 (that is, the flow path outflow portion 12) of the non-external device connection portion side bracket 2 in order to improve the stator 3 cooling advantage.

Also, a multiple of the heatsink 26 may be provided as one with respect to two electronic parts 25, one with respect to three electronic parts, or one with respect to one or more electronic parts. The substrate 24 may be an epoxy-based substrate or a metal-based substrate.

Furthermore, a cooling refrigerant is a gas.

Further still, a beam portion wherein one outflow port is divided into two or more in the axial direction, or divided into two or more in the circumferential direction, may be provided in the external device connection portion side flow path outflow portion 14 and the non-external device connection portion side bracket refrigerant outflow portion 22.

### Reference Signs List

1: external device connection portion side bracket, 2: non-external device connection portion side bracket, 3: stator, 3a: stator core, 3b: stator winding, 4: rotary shaft, 5: rotor, 5a: rotor core, 5b: field winding, 6: plate, 7: external device connection portion side blade, 8: non-external device connection portion side blade, 11: flow path inflow portion, 11a: first flow path inflow portion thickness, 11b: second flow path inflow portion thickness, 12: flow path outflow portion, 12a: first flow path outflow portion thickness, 12b: second flow path outflow portion thickness, 12c: third flow path outflow portion thickness, 13: external device connection portion side flow path inflow portion, 14: external device connection portion side flow path outflow portion, 15: first separating portion, 16: second separating portion, 19: power conversion unit refrigerant inflow portion, 20: power conversion unit refrigerant outflow portion, 21: non-external device connection portion side bracket refrigerant inflow portion, 22: non-external device connection portion side bracket refrigerant outflow portion, 23: case, 24: substrate, 25: electronic part, 26: heatsink, 26a: fin, 100: rotating electric machine, 200: power conversion unit, 300: rotating machine main body, 400: external device connection portion.

## Claims

1. A rotating electric machine (100), comprising a rotating machine main body (300), a power conversion unit (200) provided on one side on an axis of rotation of the rotating machine main body (300) and electrically connected to the rotating machine main body (300) and pulley means (400) provided on the other side on the axis of rotation of the rotating machine main body (300),
in which rotating electric machine:
the rotating machine main body (300) has a pulley means side bracket (1) and a non-pulley means side bracket (2) that configure a housing, a rotor (5) is supported in such a way as to be able to rotate, by the pulley means side bracket (1) and the non-pulley means side bracket (2), a stator (3), which has a stator core (3a) and a stator winding (3b), is fixed by the pulley means side bracket (1) and the non-pulley means side bracket (2) and is disposed coaxially in such a way as to enclose the rotor (5), and blades (8) are attached to a non-pulley means side of the rotor (5)
wherein a flow path (W2) along which gas as a refrigerant is caused to flow by rotation of the blades (8), cooling the power conversion unit (200) and the stator (5), is formed, the flow path having a flow path inflow portion (11) in a radial direction outer peripheral face of the power conversion unit (200) and a flow path outflow portion (12) in a radial direction outer peripheral face of the non-pulley means side bracket (2), the flow path inflow portion (11) and the flow path outflow portion (12) being disposed separated in a rotation axis direction;
wherein in the flow path outflow portion (12), a first flow path outflow portion thickness (12a) configuring a rotation axis direction thickness, protruding from a non-pulley means side end face side of the non-pulley means side bracket (2) toward the pulley means (400) side, inward in the radial direction from the flow path outflow portion (12), and a second flow path outflow portion thickness (12b), configuring a radial direction thickness of the flow path outflow portion (12) in the outer peripheral face of the non-pulley means side bracket (2), are disposed in such a way that at least one portion of a third flow path outflow portion thickness (12c), which is a radial direction thickness of the first flow path outflow portion thickness (12a), and one portion of the second flow path outflow portion thickness (12b), overlap in such a way that there is no opening between the first flow path outflow portion thickness (12a) and the second flow path outflow portion thickness (12b), when seen in the rotation axis direction, wherein either (a) the second flow path outflow portion thickness (12b) is thicker in a radial direction than the third flow path outflow portion thickness (12c) and/or (b) the second flow path outflow portion thickness (12b) and the third flow path outflow portion thickness (12c) overlap in only one portion, whereby the first flow path outflow portion thickness (12a) forms a first separating portion (15) restricting the heated refrigerant, which flows out from the flow path outflow portion (12), from flowing in again by the flow path inflow portion (11).

2. The rotating electric machine according to claim 1, wherein the second flow path outflow portion thickness (12b) and the third flow path outflow portion thickness (12c) overlap in one portion and the first separating portion (15) is configured to curve in the rotation axis direction along an outline of the non-pulley means side bracket (2).

3. The rotating electric machine according to claim 1 or claim 2, wherein the flow path outflow portion (12) is included in only a radial direction outer peripheral face of the non-pulley means side bracket (2).

4. The rotating electric machine according to any one of claims 1 to 3, wherein a face of the power conversion unit (200) on the pulley means (400) side and a face of the non-pulley means side bracket (2) on the non-external device connection portion side oppose each other in the flow path, and are disposed in such a way that, in use of the rotating electric machine, a refrigerant that has flowed out from the power conversion unit (200) flows into the non-pulley means side bracket (2).

5. The rotating electric machine according to any one of claims 1 to 4, wherein the power conversion unit (200) includes a substrate (24) and an electronic part (25) included in the substrate (24), and includes a case (23) that encloses the substrate (24) and the electronic part (25), and the flow path inflow portion (11) and the flow path outflow portion (12) are separated by a second separating portion (16) included in a face of the case (23) opposing the non-pulley means side bracket (2) .

6. The rotating electric machine according to claim 5, wherein at least one portion of wiring members (27, 28, 29) that electrically connect parts configuring the power conversion unit (200), or electrically connect the power conversion unit (200) and the rotating machine main body (300), are embedded in the second separating portion (16).

7. The rotating electric machine according to any one of claims 1 to 6, wherein the stator winding (3b) is exposed from an end face on the non-pulley means side of the stator core (3a), at least one portion protrudes into the flow path, and at least one portion is disposed in such a way as to overlap a pulley means side flow path outflow portion (14) and the flow path outflow portion (12) in the rotation axis direction.

8. The rotating electric machine according to claim 7, wherein an end portion of the stator winding (3b), exposed from end faces on the pulley means side and the non-pulley means side of the stator core (3a), includes a rotation axis direction recessed portion (3c) in one or more places in a circumferential direction.

## Patentansprüche

1. Rotierende elektrische Maschine (100), die einen Hauptkörper (300) der rotierenden Maschine, eine Umrichteinheit (200), die an einer Seite an einer Rotationsachse des Hauptkörpers (300) der rotierenden Maschine angeordnet und elektrisch mit dem Hauptkörper (300) der rotierenden Maschine (300) verbunden ist, und ein Riemenscheibenmittel (400), das an der anderen Seite an der Rotationsachse des Hauptkörpers (300) der rotierenden Maschine vorgesehen ist, aufweist,
in welcher rotierenden elektrischen Maschine:
der Hauptkörper (300) der rotierenden elektrischen Maschine (300) eine Riemenscheibenmittelseitenhalterung (1) und eine Nichtriemenscheibenmittelseitenhalterung (2) aufweist, die ein Gehäuse konfigurieren, ein Rotor (5) in einer solchen Weise durch die Riemenscheibenmittelhalterung (1) und die Nichtriemenscheibenmittelseitenhalterung (2) gelagert ist, dass er in der Lage ist, zu rotieren, ein Stator (3), der einen Statorkern (3a) und eine Statorwicklung (3b) aufweist, durch die Riemenscheibenmittelseitenhalterung (1) und die Nichtriemenscheibenmittelseitenhalterung (2) befestigt ist und koaxial in einer solchen Weise angeordnet ist, dass er den Rotor (5) umschließt, und Schaufeln (8) an einer Nichtriemenscheibenmittelseite des Rotors (5) befestigt sind; wobei
ein Strömungspfad (W2), entlang dem Gas als ein Kühlmittel durch Rotation der Schaufeln (8) dazu gebracht wird, zu strömen, wobei es die Umrichteinheit (200) und den Stator (5) kühlt, ausgebildet ist, wobei der Strömungspfad einen Strömungspfadeinströmabschnitt (11) in einer äußeren Umfangsfläche in radialer Richtung der Umrichteinheit (200) und einen Strömungspfadausströmabschnitt (12) in einer äußeren Umfangsfläche in radialer Richtung der Nichtriemenscheibenmittelseitenhalterung (2) aufweist, wobei der Strömungspfadeinströmabschnitt (11) und der Strömungspfadausströmabschnitt (12) in einer Rotationsachsenrichtung getrennt angeordnet sind; wobei
eine erste Strömungspfadeinströmabschnittsdicke (12a) in dem Strömungspfadeinströmabschnitt (12), die eine Rotationsachsenrichtungsdicke konfiguriert, die von einer Nichtriemenscheibenmittelseitenendflächenseite der Nichtriemenscheibenmittelseitenhalterung (2) in Richtung der Seite des Riemenscheibenmittels (400) vorsteht, nach innen in der radialen Richtung von dem Strömungspfadausströmabschnitt (12), und eine zweite Strömungspfadausströmabschnittsdicke (12b), die eine Dicke in radialer Richtung des Strömungspfadausströmabschnitts (12) in der äußeren Umfangsfläche der Nichtriemenscheibenmittelseitenhalterung (2) konfiguriert, in einer solchen Weise angeordnet sind, dass zumindest ein Abschnitt einer dritten Strömungspfadausströmabschnittdicke (12c), die eine Dicke in radialer Richtung der ersten Strömungspfadausströmabschnittsdicke (12a) ist, und ein Abschnitt der zweiten Strömungspfadausströmabschnittsdicke (12b) in einer solchen Weise überlappen, dass es keine Öffnung zwischen der ersten Strömungspfadausströmabschnittsdicke (12a) und der zweiten Strömungspfadausströmabschnittsdicke (12b) bei Betrachtung in der Rotationsachsenrichtung gibt, wobei (a) die ersten Strömungspfadausströmabschnittsdicke (12a) in einer radialen Richtung dicker ist als die dritte Strömungspfadausströmabschnittsdicke (12c) und/oder (b) die zweite Strömungspfadausströmabschnittsdicke (12b) und die dritte Strömungspfadausströmabschnittsdicke (12c) in nur einem Abschnitt überlappen, wodurch die erste Strömungspfadausströmabschnittsdicke (12a) einen ersten Trennabschnitt (15) ausbildet, der das erwärmte Kühlmittel, das aus dem Strömungspfadausströmabschnitt (12) ausströmt, daran hindert, wieder durch den Strömungspfadeinströmabschnitt (11) einzuströmen.

2. Rotierende elektrische Maschine nach Anspruch 1, wobei die zweite Strömungspfadausströmabschnittsdicke (12b) und die dritte Strömungspfadausströmabschnittsdicke (12c) in einem Abschnitt überlappen und der erste Trennabschnitt (15) dazu ausgestaltet ist, sich in der Rotationsachsenrichtung entlang einer Kontur der Nichtriemenscheibenmittelseitenhalterung (2) zu krümmen.

3. Rotierende elektrische Maschine nach Anspruch 1 oder 2, wobei der Strömungspfadausströmabschnitt (12) nur in einer äußeren Umfangsfläche in radialer Richtung der Nichtriemenscheibenmittelseitenhalterung (2) enthalten ist.

4. Rotierende elektrische Maschine nach einem der Ansprüche 1 bis 3, wobei eine Fläche der Umrichteinheit (200) an der Seite des Riemenscheibenmittels (400) und eine Fläche der Nichtriemenscheibenmittelseitenhalterung (2) an der nichtexternen Vorrichtungsverbindungsabschnittsseite einander in dem Strömungspfad gegenüberliegen und in einer solchen Weise angeordnet sind, dass, bei Verwendung der rotierenden elektrischen Maschine, ein Kühlmittel, das von der Umrichteinheit (200) ausgeströmt ist, in die Nichtriemenscheibenmittelseitenhalterung (2) strömt.

5. Rotierende elektrische Maschine nach einem der Ansprüche 1 bis 4, wobei die Umrichteinheit (200) ein Substrat (24) und ein elektronisches Teil (25), das in dem Substrat enthalten ist, aufweist, und ein Gehäuse (23) aufweist, das das Substrat (24) und das elektronische Teil (25) umschließt, und der Strömungspfadeinströmabschnitt (11) und der Strömungspfadausströmabschnitt (12) durch einen zweiten Trennabschnitt (16) getrennt sind, der in einer Fläche des Gehäuses (23) enthalten ist, die der Nichtriemenscheibenmittelseitenhalterung (2) gegenüberliegt.

6. Rotierende elektrische Maschine nach Anspruch 5, wobei zumindest ein Abschnitt von Verdrahtungselementen (27, 28, 29), die Teile elektrisch verbinden, die die Umrichteinheit (200) konfigurieren, oder die Umrichteinheit (200) und den Hauptkörper (300) der rotierenden Maschine (300) verbinden, in dem zweiten Trennabschnitt (16) eingebettet sind.

7. Rotierende elektrische Maschine nach einem der Ansprüche 1 bis 6, wobei die Statorwicklung (3b) von einer Endfläche an der Nichtriemenscheibenmittelseite des Statorkerns (3a) freigelegt ist, zumindest ein Abschnitt in den Strömungspfad vorsteht und zumindest ein Abschnitt in einer solchen Weise angeordnet ist, dass er einen Riemenscheibenmittelseitenströmungspfadausströmabschnitt (14) und den Strömungspfadausströmabschnitt (12) in der Rotationsachsenrichtung überlappt.

8. Rotierende elektrische Maschine nach Anspruch 7, wobei ein Endabschnitt der Statorwicklung (3b), der von Endflächen an der Riemenscheibenseite und der Nichtriemenscheibenseite des Statorkerns (3a) freigelegt ist, einen in Rotationsachsenrichtung vertieften Abschnitt (3c) an einer oder mehr Stellen in einer Umfangsrichtung aufweist.

## Revendications

1. Machine électrique rotative (100), comprenant un corps principal (300) de machine rotative, une unité (200) de conversion de puissance prévue sur un côté sur un axe de rotation du corps principal (300) de machine rotative et électriquement raccordée au corps principal (300) de machine rotative, et un moyen (400) formant poulie prévu sur l'autre côté sur l'axe de rotation du corps principal (300) de machine rotative,
dans laquelle machine électrique rotative :
le corps principal (300) de machine rotative présente un support (1) côté moyen formant poulie et un support (2) côté sans moyen formant poulie qui configurent un logement, un rotor (5) supporté, par le support (1) côté moyen formant poulie et le support (2) côté sans moyen formant poulie, de manière à être apte à tourner, un stator (3), qui présente un noyau de stator (3a) et un enroulement de stator (3b), est fixé par le support (1) côté moyen formant poulie et le support (2) côté sans moyen formant poulie et est disposé coaxialement de manière à renfermer le rotor (5), et des pales (8) sont fixées à un côté sans moyen formant poulie du rotor (5) ;
dans laquelle
une voie d'écoulement (W2) est formée, le long de laquelle un gaz en tant qu'un fluide frigorigène est amené à s'écouler par une rotation des pales (8), refroidissant l'unité (200) de conversion de puissance et le stator (5), la voie d'écoulement présentant une partie (11) d'entrée de voie d'écoulement dans une face périphérique extérieure en direction radiale de l'unité (200) de conversion de puissance et une partie (12) de sortie de voie d'écoulement dans une face périphérique extérieure en direction radiale du support (2) côté sans moyen formant poulie, la partie (11) d'entrée de voie d'écoulement et la partie (12) de sortie de voie d'écoulement étant disposées de façon séparée dans une direction d'axe de rotation ;
dans laquelle
dans la partie (12) de sortie de voie d'écoulement, une première épaisseur (12a) de partie de sortie de voie d'écoulement, configurant une épaisseur dans une direction d'axe de rotation, faisant saillie par rapport à un côté de face d'extrémité du côté sans moyen formant poulie du support (2) de côté sans moyen formant poulie vers le côté moyen (400) formant poulie, vers l'intérieur dans la direction radiale par rapport à la partie (12) de sortie de voie d'écoulement, et une deuxième épaisseur (12b) de partie de sortie de voie d'écoulement, configurant une épaisseur en direction radiale de la partie (12) de sortie de voie d'écoulement dans la face périphérique extérieure du support (2) de côté sans moyen formant poulie, sont disposées de telle manière qu'au moins une partie d'une troisième épaisseur (12c) de partie de sortie de voie d'écoulement, qui est une épaisseur en direction radiale de la première épaisseur (12a) de partie de sortie de voie d'écoulement, et une partie de la deuxième épaisseur (12b) de partie de sortie de voie d'écoulement, se chevauchent de telle manière qu'il n'y ait pas d'ouverture entre la première épaisseur (12a) de partie de sortie de voie d'écoulement et la deuxième épaisseur (12b) de partie de sortie de voie d'écoulement, lorsqu'observées dans la direction d'axe de rotation, dans laquelle (a) la deuxième épaisseur (12b) de partie de sortie de voie d'écoulement est supérieure dans une direction radiale à la troisième épaisseur (12c) de partie de sortie de voie d'écoulement et/ou (b) la deuxième épaisseur (12b) de partie de sortie de voie d'écoulement et la troisième épaisseur (12c) de partie de sortie de voie d'écoulement se chevauchent dans seulement une partie, ce par quoi la première épaisseur (12a) de partie de sortie de voie d'écoulement forme une première partie de séparation (15) limitant, par la partie (11) d'entrée de voie d'écoulement, un nouvel écoulement d'entrée du fluide frigorigène chauffé, qui sort par la partie (12) de sortie de voie d'écoulement.

2. Machine électrique rotative selon la revendication 1, dans laquelle la deuxième épaisseur (12b) de partie de sortie de voie d'écoulement et la troisième épaisseur (12c) de partie de sortie de voie d'écoulement se chevauchent dans une partie et la première partie de séparation (15) est configurée pour s'incurver dans la direction d'axe de rotation le long d'un contour du support (2) de côté sans moyen formant poulie.

3. Machine électrique rotative selon la revendication 1 ou la revendication 2, dans laquelle la partie (12) de sortie de voie d'écoulement est incluse dans seulement une face périphérique extérieure en direction radiale du support (2) de côté sans moyen formant poulie.

4. Machine électrique rotative selon l'une quelconque des revendications 1 à 3, dans laquelle une face de l'unité (200) de conversion de puissance sur le côté moyen (400) formant poulie et une face du support (2) de côté sans moyen formant poulie sur le côté partie de raccordement de dispositif non externe sont opposées l'une à l'autre dans la voie d'écoulement, et sont disposées de telle manière que, dans l'utilisation de la machine électrique rotative, un fluide frigorigène qui est sorti de l'unité (200) de conversion de puissance entre dans le support (2) de côté sans moyen formant poulie.

5. Machine électrique rotative selon l'une quelconque des revendications 1 à 4, dans laquelle l'unité (200) de conversion de puissance inclut un substrat (24) et une pièce électronique (25) incluse dans le substrat (24), et inclut un boîtier (23) qui renferme le substrat (24) et la pièce électronique (25), et la partie (11) d'entrée de voie d'écoulement et la partie (12) de sortie de voie d'écoulement sont séparées par une seconde partie de séparation (16) incluse dans une face du boîtier (23) à l'opposé du support (2) de côté sans moyen formant poulie.

6. Machine électrique rotative selon la revendication 5, dans laquelle au moins une partie d'éléments de câblage (27, 28, 29) qui raccordent électriquement des parties configurant l'unité (200) de conversion de puissance, ou raccordent électriquement l'unité (200) de conversion de puissance et le corps principal (300) de machine rotative, sont incorporés dans la seconde partie de séparation (16).

7. Machine électrique rotative selon l'une quelconque des revendications 1 à 6, dans laquelle l'enroulement de stator (3b) est exposé sur une face d'extrémité sur le côté sans moyen formant poulie du noyau de stator (3a), au moins une partie fait saillie dans la voie d'écoulement, et au moins une partie est disposée de manière à chevaucher une partie de sortie de voie d'écoulement du côté moyen formant poulie (14) et la partie (12) de sortie de voie d'écoulement dans la direction d'axe de rotation.

8. Machine électrique rotative selon la revendication 7, dans laquelle une partie d'extrémité de l'enroulement de stator (3b), exposée sur des faces d'extrémité sur le côté moyen formant poulie et le côté sans moyen formant poulie du noyau de stator (3a), inclut une partie en retrait dans une direction d'axe de rotation (3c) en un ou plusieurs endroits dans une direction circonférentielle.
